# EUROPEAN PATENT SPECIFICATION

(11) **EP 4 267 862 B1**
(45) Date of publication and mention of the grant of the patent: **23.07.2025**
(21) Application number: 21844402.4
(22) Date of filing: 22.12.2021
(51) Int. Cl.: F16D 65/12

(54) **METHOD FOR MANUFACTURING A BRAKING BAND FOR A BRAKE DISC MADE OF TITANIUM, BRAKING BAND, AND BRAKE DISC MADE OF TITANIUM**
VERFAHREN ZUR HERSTELLUNG EINES BREMSBANDES FÜR EINE BREMSSCHEIBE AUS TITAN, BREMSBAND UND BREMSSCHEIBE AUS TITAN
PROCÉDÉ DE FABRICATION D'UNE BANDE DE FREINAGE POUR UN DISQUE DE FREIN EN TITANE, BANDE DE FREINAGE, ET DISQUE DE FREIN EN TITANE

(30) Priority: 22.12.2020 IT 202000031880
(43) Date of publication of application: 01.11.2023
(73) Proprietor: Brembo S.p.A., 24035 Curno (Bergamo) (IT)
(72) Inventor: MILANESI, Andrea, 24035 Curno, Bergamo (IT); BONFANTI, Andrea, 24035 Curno, Bergamo (IT); BERTASI, Federico, 24035 Curno, Bergamo (IT); MANCINI, Alessandro, 24035 Curno, Bergamo (IT)
(74) Representative: De Lorenzo, Danilo
(86) International application number: PCT/IB2021/062155
(87) International publication number: WO 2022/137145

(56) References cited:
- GB-A- 2 154 614
- US-A1- 2019 056 003
- US-B2- 8 028 812

## Description

### FIELD OF APPLICATION

This invention relates to a braking band for a brake disc for disc brakes, a brake disc, and a method for manufacturing the braking band and the brake disc.

### PRIOR ART

A brake disc of a disc braking system of a vehicle comprises an annular structure, or braking band, and a central fixing element, known as a bell, by means of which the disc is fixed to the rotating part of a vehicle suspension, for example a hub. The braking band is provided with two opposed braking sides (or braking surfaces) suitable for cooperating with friction elements (brake pads) which are housed in at least one caliper body that is placed astride said braking band and is integral with a non-rotating component of the vehicle suspension. The controlled interaction between the opposing brake pads and the opposing braking surfaces of the braking band creates, by means of friction, a braking action which decelerates or stops the vehicle.

Generally, the brake disc is made of gray cast iron or steel. In fact, this material allows good braking performance (especially in terms of limited wear) to be obtained at a relatively low cost. Discs made of carbon or carbon-ceramic materials offer much higher performance, but at a much higher cost.

The limits of traditional discs made of cast iron or steel are linked to excessive weight, excessive wear and excessive corrosion. As far as gray cast iron discs are concerned, another very negative aspect is linked to excessive surface oxidation, with the consequent formation of rust. This aspect affects both the performance of the brake disc and its appearance, as the rust on the brake disc is aesthetically unacceptable to the user. An attempt was made to address these problems by manufacturing the discs in gray cast iron or steel with a protective coating. The protective coating reduces the wear of the disc, and protects the gray cast iron base from surface oxidation, thus avoiding the formation of a layer of rust. The protective coatings available today and applied to discs, although offering resistance to wear, are however subject to flaking that causes said coatings to detach from the disc itself.

A protective coating of this type is described for example in US4715486, which relates to a low-wear disc brake. The disc, made in particular of cast iron, has a coating made with a particulate material deposited on the disc by means of a high kinetic energy impact technique. Traditional protective coatings tend to detach from discs of this kind made of gray cast iron or steel; microbubbles form inside the coating, which microbubbles may prevent sufficient adhesion between the coating and the disc, thus facilitating the detachment of said coating.

A further example of a cast iron brake disc that has a protective coating is also described in EP3658798 A1. This type of disc requires adhesion layers or surface treatments between the cast iron and the coating in order to make adhesion more effective.

It is clear from the above that discs which are made of gray cast iron or steel and provided with protective coatings are not suitable for the high-performance braking system sector.

In the sector, there is therefore a great need to resolve the disadvantages cited with reference to the prior art. In particular, there is a need to provide discs which are capable of increasing resistance to wear and corrosion but which are at the same time as light as possible.

The following documents US 8 028 812 B2, GB 2 154 614 A and US 2019/056003 A1 can be cited as further prior art.

### DISCLOSURE OF THE INVENTION

The need to provide discs provided with coatings which are not subject to flaking or which do not generally detach, which guarantee resistance to wear and corrosion over time, and which have as contained a weight as possible, is satisfied by a method for manufacturing a braking band and a brake disc, by a braking band and by a brake disc for a disc brake according to the accompanying independent claims.

### DESCRIPTION OF THE DRAWINGS

Further features and advantages of this invention will become more apparent from the following detailed description of preferred, non-limiting embodiments thereof, in which:

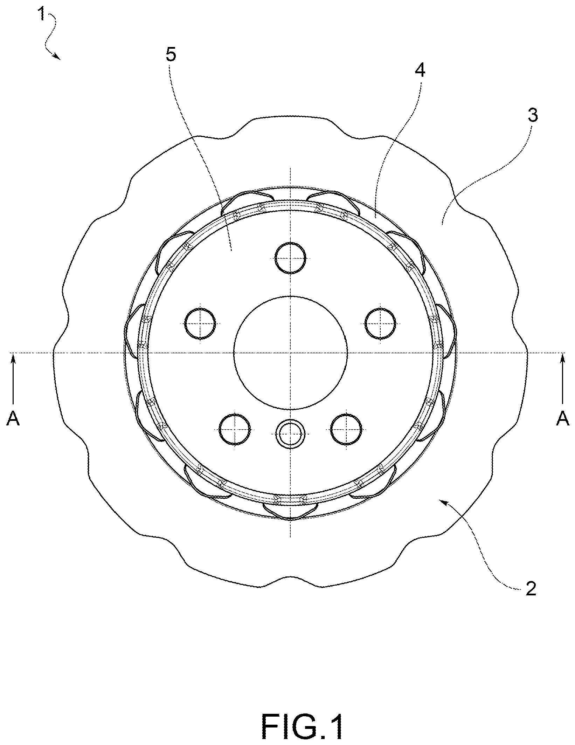

- Fig. 1 shows a top plan view of a brake disc according to an embodiment of this invention;

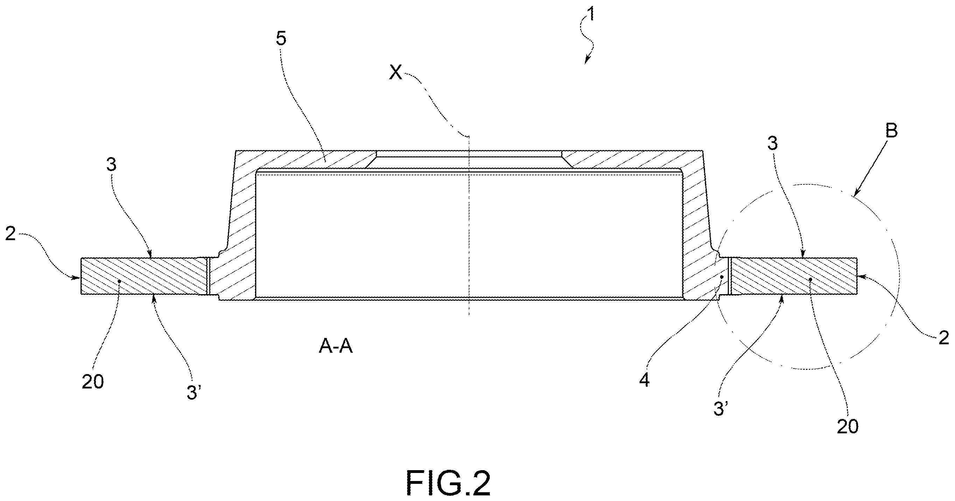

- Fig. 2 shows a sectional view of the brake disc of Fig. 1 along the section line A-A indicated therein;
- Fig. 3 shows an enlarged detail of Fig. 2, relating to a portion of the braking band indicated in the box B shown therein, according to an embodiment of this invention;
- Fig. 4 shows an enlarged detail of Fig. 2, relating to a portion of the braking band indicated in the box B shown therein, according to another embodiment of this invention.

Elements or parts of elements common to the embodiments described hereinafter will be indicated with the same reference signs.

### DETAILED DESCRIPTION

With reference to the above figures, reference sign 1 globally denotes a brake disc according to this invention.

According to a general embodiment of the invention, shown in the accompanying figures, the brake disc 1 comprises a braking band 2 which is provided with two opposed braking surfaces 2a and 2b, each of which defines, at least in part, one of the two main sides (or faces) of the brake disc.

The braking band 2 consists of a base band 20 having an upper face 20a and a lower face 20b arranged on the opposite side to, i.e. opposed to, the upper face 20a. The lower face 20b and upper face 20a each define, at least in part, one of the two sides of the brake disc 1.

The base band 20 is mainly or entirely made of titanium or titanium alloy, preferably a titanium (Ti) and aluminum (Al) alloy, even more preferably a titanium (Ti), aluminum (Al) and vanadium (V) alloy, preferably a Ti6Al4V alloy.

According to an embodiment, the base band 20 is mainly or entirely made of Ti6242 (Ti-6Al-2Sn-4Zr-2Mo).

In the continuation of the present discussion, it is understood that references to titanium alloy are also intended to encompass the titanium alloys mentioned above.

It is clear that titanium and aluminum alloy is therefore intended to mean all of the possible alloys that are suitable for being used in drawing processes and subsequent mechanical processing or in casting processes and subsequent mechanical processing.

According to an embodiment, the whole brake disc 1 is made of titanium or titanium alloy.

The braking band 2 is provided with an upper coating layer 3 which is joined to the base band 20 along the upper face 20a, i.e. preferably directly joined to the base band 20.

The braking band 2 is provided with a lower coating layer 3' which is joined to the base band 20 along the lower face 20b, i.e. preferably directly joined to the base band 20.

The upper coating layer 3 and the lower coating layer 3' consist of a mixture of ceramic and metal and/or intermetallic particles.

According to one embodiment, the variant in which the upper coating layer 3 and/or the lower coating layer 3' are directly joined to the base band 20, the mixture of ceramic and metal particles consists of chromium carbide (CrC) and nickel-chromium (NiCr), or a nickel-chromium superalloy.

According to one embodiment, the variant in which the upper coating layer 3 and/or the lower coating layer 3' are directly joined to the base band 20, the mixture or ceramic and metal particles consists of chromium carbide and iron (Fe), chromium (Cr) and aluminum (Al).

In other alternative embodiments, the chromium carbide in all of the preceding variants may be substituted with a carbide selected from the group including: tungsten carbide (WC), silicon carbide (SiC), niobium carbide (NbC) and titanium carbide (TiC).

In other alternative embodiments, together with the nickel-chromium (NiCr), or together with the mixture of iron (Fe), chromium (Cr) and aluminum (Al), a mixture of one or more of the following carbides may be used: chromium carbide (CrC), tungsten carbide (WC), silicon carbide (SiC), niobium carbide (NbC) and titanium carbide (TiC).

The synergistic combination between the base band made of titanium or titanium alloy and the upper or lower coating layer 3, 3' provided with ceramic and metal particles surprisingly makes it possible to ensure an extremely high corrosion potential of greater than -400mV with respect to the SCE (saturated calomel electrode) (the greater the corrosion potential, the less the manufactured product corrodes). Consequently, the synergistic combination between the base band made of titanium or titanium alloy and the upper or lower coating layer 3, 3' makes it possible to ensure a greater resistance to corrosion than the solutions which are known today and commonly used to manufacture brake discs.

According to an advantageous embodiment, the upper coating layer 3 and the lower coating layer 3' consist of a mixture of particles comprising at least one transition metal carbide and at least one metal or an intermetallic compound (alloy).

More particularly, according to an even more advantageous embodiment, the upper coating layer 3 and the lower coating layer 3' consist of tungsten carbide (WC), iron (Fe), chromium (Cr) and aluminum (Al) and are obtained by depositing tungsten carbide (WC), iron (Fe), chromium (Cr) and aluminum (Al) in particulate form directly on the base band 20 by means of a suitable depositing technique. The depositing technique is preferably a spraying technique, for example a HVOF (high velocity oxygen fuel) or HVAF (high velocity air fuel) or KM (kinetic metallization) technique. Moreover, the depositing technique is preferably a plasma deposition technique, for example APS (atmospheric plasma deposition), or a laser deposition technique, for example a laser cladding technique.

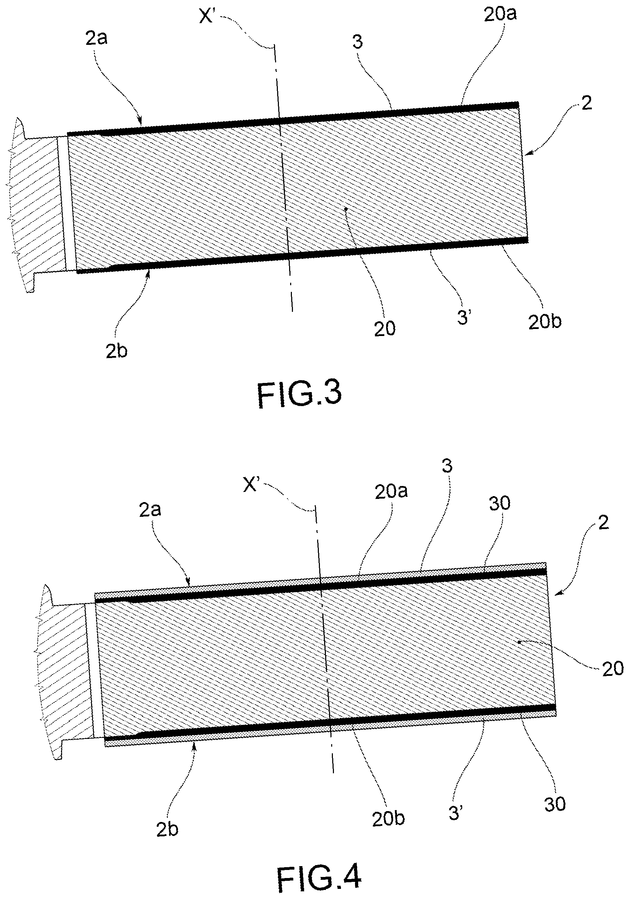

According to a further aspect of the invention, as shown schematically in Fig. 4, the braking surface 2a or 2b obtained by said upper coating layer 3 or lower coating layer 3' is not directly adhered to the base band 20, but instead a protective base coating 30 is arranged therebetween, which protective base coating is directly deposited between the base band 20 and the upper coating layer 3 or lower coating layer 3' in the axial direction X' parallel to the axis of rotation X of the brake disc 1 when mounted on the wheel hub.

The protective base coating 30 consists of a material in particulate form consisting of:
- chromium carbide (Cr3C2) and nickel-chromium (NiCr), or
- nickel-chromium (NiCr), iron (Fe), molybdenum (Mo), cobalt (Co), manganese (Mn) and aluminum (Al),
by means of a spray deposition technique, preferably HVOF (high velocity oxygen fuel), or by a HVAF (high velocity air fuel) technique or by a KM (kinetic metallization) technique, or by a laser deposition technique or by a laser cladding technique or by a thermal spray technique.

The protective base coating 30 is therefore attached directly to the titanium or to the titanium alloy which forms the base band 20 of the braking band 2.

The protective base coating 30 preferably consists of:
- 65% to 95% chromium carbide (Cr3C2) and the remainder nickel-chromium (NiCr) or
- nickel-chromium (NiCr) with a content by weight of nickel (Ni) from 40% to 75% and with a content by weight of chromium (Cr) from 14% to 30%, and the remainder iron (Fe), molybdenum (Mo), optionally cobalt (Co), manganese (Mn) and aluminum (Al).

The upper coating layer 3 or lower coating layer 3' preferably consists of 75% to 87% by weight of tungsten carbide (WC) and the remainder iron (Fe), chromium (Cr) and aluminum (Al). The upper coating layer 3 or lower coating layer 3' even more preferably consists of 75% to 87% by weight of tungsten carbide (WC) and the remaining portion iron (Fe), chromium (Cr) and aluminum (Al).

Advantageusly, the protective base coating 30 has a thickness between 10 µm and 250 µm, preferably between 15 and 150 µm and even more preferably between 20 µm and 90 µm, while the upper coating layer 3 or lower coating layer 3' has a thickness between 10 µm and 250 µm, preferably between 15 µm and 150 µm, even more preferably between 20 and 90 µm.

It was possible to verify that, surprisingly, the presence of titanium and a coating layer formed of ceramics and metals, i.e. of particles of ceramic compounds dispersed in a metal and/or intermetallic matrix, makes it possible to significantly reduce the corrodibility the brake disc, while simultaneously preventing the occurrence of phenomena of the coatings flaking or generally detaching.

The thickness of the protective base coating 30 and of the upper coating layer 3 and lower coating layer 3' is defined so as to prevent thicknesses that are too thin, which could be abraded during braking (or produce less of an anti-corrosive effect), and thicknesses that are too thick, which could cause detachment problems. With high thicknesses, the detachment may be caused by the different behavior of titanium with respect to the material of the coatings: a thick rigid layer might not imitate the deformations of the disc and thus cause the protective base or upper and lower coating layers to fracture and detach. In other words, the thickness of the protective base coating 30 or of the upper coating layer 3 and lower coating layer 3' may create more or less significant mechanical stresses on the interface between the coating and underlying material, which risks causing the detachment of the coating itself.

Moreover, it has surprisingly been experimentally verified that the combination between the base band 20 made of titanium alloy and the coating layer preferably formed of tungsten carbide and iron, chromium and aluminum ensures a corrosion potential of greater than - 370mV vs SCE.

It has also been experimentally verified that a braking band of this kind ensures high mechanical strength and a lower brittleness than discs made of cast iron/steel.

Moreover, the anticorrosive action is in any case further enhanced by the presence of the base coating layer 30. By virtue of the composition of this protective base coating 30 (Cr3C2 and NiCr, or NiCr, Fe, Mo, Co, Mn and Al) and the deposition method, this coating 30 also performs an anticorrosive action on the braking surface of the brake disc.

The anticorrosive action is also beneficial to the integrity of the upper and lower coating layer 3, 3' and to the adhesion thereof to the brake disc, although it is not indispensable.

In the embodiment in which the protective base coating 30 is formed of Cr3C2 and NiCr, or NiCr, Fe, Mo, Co, Mn and Al, this base coating 30 also performs a mechanical function of matching the thermal expansions of the titanium, thus reducing the risk of localized weakening.

For simplicity of discussion, the braking band 2 and the brake disc 1 will now be described in conjunction with the method according to this invention.

The brake disc 1 comprises a braking band 2 as described herein and a bell 5 connected to said braking band 2.

According to one embodiment, the bell 5 is connected in one piece to the braking band 2 and consists of a titanium or titanium alloy co-casting with the base band 20.

According to one embodiment, the bell 5 is connected in one piece to the braking band 2 and consists of an aluminum alloy co-casting with the base band 20 made of titanium or titanium alloy.

It is clear that the braking band 2 according to this invention may also be connected to a bell 5 which is not co-cast (or made in one piece), but may be connected by means of bell-band connection means according to known techniques (assembling, interference fitting, riveting and the like).

The braking band 2 is preferably, but not necessarily, manufactured using the method according to the invention which will now be described.

According to a general embodiment of the method according to the invention, the method comprises the following operating steps:
step a): providing a braking band 2 provided with a base band 20 having an upper face 20a and a lower face 20b arranged on the opposite side to, i.e. opposed to, the upper face 20a, the lower face and upper face each defining, at least in part, one of the two sides of the brake disc 1, the base band 20 being made of titanium or titanium alloy;
step b): directly depositing a material in particulate form consisting of ceramic and metal particles above at least the upper face 20a and/or the lower face 20b so to create an upper coating layer 3 and/or lower coating layer 3' suitable for withstanding the braking action of the calipers of a disc brake.

According to one embodiment, in order to manufacture the braking band 2 of step a), therefore before step b), the following steps are optionally provided:
a1) manufacturing a base band 20 from titanium by blanking or by casting or by machining or by forging;
a2) mechanically processing the upper face 20a and the lower face 20b in order to obtain a surface that is suitable for receiving the material in particulate form consisting of ceramic and metal particles.

In the variant embodiment of the brake disc 1, manufactured by co-casting a bell made of aluminum, the method comprises the steps of:
s1) positioning the braking band 2 obtained in step a) in a mold for aluminum casting;
s2) carrying out the molding by casting aluminum in the mold, for example by means of a molding technique that uses gravity casting or low pressure casting or die casting or semi solid metal casting or squeeze casting or the like;
S3) removing the blank brake disc obtained from the co-casting of the titanium braking band and co-cast aluminum bell;
s4) optionally processing the blank brake disc along the upper face 20a and the lower face 20b, in order to obtain a surface that is suitable for receiving the material in particulate form consisting of ceramic and metal particles.

It is clear that, even in this variant embodiment, the braking band 2 consists of a base band 20 made of titanium that is obtained by blanking or by casting or by machining or by forging.

According to a variant embodiment of the brake disc 1, manufactured by co-casting a bell in aluminum, the above steps s1), s2) and s3) are therefore carried out before step b) of creating the upper coating layer 3 and/or lower coating layer 3', so that the braking band 2 which has not yet been coated is positioned in the co-casting mold.

According to another variant embodiment of the brake disc 1, manufactured by co-casting a bell in aluminum, the above steps s1), s2) and s3) are carried out after step b) of creating the upper coating layer 3 and/or lower coating layer 3', so that the braking band 2 which has already been coated is positioned in the co-casting mold. In this variant, therefore, step s1) includes positioning the braking band 2 obtained after step a) and step b) have been carried out in a mold for aluminum casting. Steps s2) and s3) are then carried out after step s1). The processing carried out in step b) preferably comprises the step of directly depositing, above at least the upper face 20a and/or the lower face 20b, a material in particulate form consisting of tungsten carbide (WC), iron (Fe), chromium (Cr) and aluminum (Al), by a deposition technique, preferably a spray deposition technique, for example HVOF (high velocity oxygen fuel), or by a HVAF (high velocity air fuel) technique or by a KM (kinetic metallization) technique, thus forming an upper coating layer 3 and/or lower coating layer 3' suitable for withstanding the braking action of the calipers of a disc brake, i.e. forming at least one of the two braking surfaces 2a, 2b of the braking band 2.

According to a second aspect of the method according to the invention, before directly depositing a material in particulate form consisting of ceramic and metal particles above at least the upper face 20a and/or lower face 20b, step b) may include a material in particulate form consisting of:
- chromium carbide (Cr3C2) and nickel-chromium (NiCr), or
- nickel-chromium (NiCr), iron (Fe), molybdenum (Mo), cobalt (Co), manganese (Mn) and aluminum (Al),
being deposited by a spray deposition technique, preferably HVOF (high velocity oxygen fuel), or by a HVAF (high velocity air fuel) technique or by a KM (kinetic metallization) technique, thus forming a protective base coating 30 which covers at least the upper face 20a and/or lower face 20b of the base band 20 and is arranged under the upper coating layer 3 and/or lower coating layer 3' suitable for withstanding the braking action of the calipers of a disc brake.

As already mentioned above, the titanium alloy of the base band 20 is preferably a titanium (Ti) and aluminum (Al) alloy, more preferably a titanium (Ti), aluminum (Al) and vanadium (V) alloy, even more preferably a Ti6Al4V alloy.

The material in particulate form deposited in the depositing step b) to obtain the protective base coating 30 preferably consists of 65% to 95% by weight of chromium carbide (Cr3C2) and the remainder nickel-chromium (NiCr).

The material in particulate form deposited in the depositing step b) to obtain the upper or lower coating layer (3, 3') preferably consists of 75% to 87% by weight of tungsten carbide (WC) and the remainder iron (Fe), chromium (Cr) and aluminum (Al), preferably consisting of 10% to 17% by weight of iron (Fe), 2.5% to 5.8% by weight of chromium (Cr), 0.6% to 2.2% by weight of aluminum (Al) and the remainder tungsten carbide (WC), even more preferably of 85% by weight of tungsten carbide (WC) and 15% by weight of iron (Fe), chromium (Cr) and aluminum (Al).

Advantageously, the brake disc 1 is provided with a portion suitable for fixing the disc to a vehicle, which portion consists of an annular portion 4 arranged centrally to the disc 1 and concentrically to the braking band 2. The fixing portion 4 supports the connecting element 5 to the wheel hub (i.e. the bell). The bell may be made in one piece with the annular fixing portion 4 or may be made separately and then fixed to the fixing portion by means of suitable connecting elements.

The annular fixing portion 4 may be made of the same material as the braking band 2, i.e. titanium or titanium alloy, or steel or aluminum. The bell 5 may also be made of titanium or titanium alloy or of another suitable material, for example steel or aluminum, this latter ensuring it is possible to keep the weight of the disc low. In particular, the whole disc (i.e. braking band, fixing portion and bell) may be made of titanium or titanium alloy.

The braking band 2 is preferably made by casting. Similarly, the fixing portion 4 and/or the bell 5 may be made by casting.

The annular fixing portion 4 may be made in one piece with the braking band 2 or may be made as a separate piece and mechanically connected to the braking band.

As already stated, both the material which forms the protective base coating 30 (chromium carbide (Cr3C2) dispersed in nickel-chromium (NiCr), or nickel-chromium (NiCr) , iron (Fe), molybdenum (Mo), cobalt (Co), manganese (Mn) and aluminum (Al)), and the material which forms the upper or lower coating layer 3, 3' (for example tungsten carbide dispersed in iron, chromium and aluminum intermetallic) are deposited in particulate form, preferably using an HVOF technique or HVAF technique or KM technique or APS technique or laser cladding technique.

These three deposition techniques are well known to a person skilled in the art, and will therefore not be described in detail in the following.

HVOF (high velocity oxygen fuel) is a powder spray deposition technique which uses a spray device provided with a mixing and combustion chamber and a spray nozzle. The chamber is supplied with oxygen and fuel. The hot combustion gas, which forms at pressures close to 1 MPa, passes the powdered material through the convergent-divergent nozzle, reaching hypersonic speeds (i.e. higher than MACH 5). The powder material to be deposited is injected into the hot gas stream, where it melts rapidly and is accelerated to speeds of the order of 1000 m/s. Once impacted on the deposition surface, the molten material cools rapidly and, due to the impact with high kinetic energy, forms a very dense and compact structure.

The HVAF (high velocity air fuel) deposition technique is similar to the HVOF technique. The difference is that, in the HVAF technique, the combustion chamber is fed with air instead of oxygen. The temperatures involved are therefore lower than those of HVOF. This allows for greater control of the thermal alteration of the coating.

The KM (kinetic metallization) deposition technique is a solid-state deposition process in which metal powders are sprayed through a two-phase sonic deposition nozzle which accelerates and electrostatically charges metal particles within an inert gas stream. Thermal energy is supplied to the transport stream. The process transforms the internal energy of the compressed inert gas and the thermal energy supplied into the kinetic energy of the powders. Once accelerated to high speed and electrically charged, the particles are directed against the deposition surface. The high-speed collision of the metal particles with this surface causes a large deformation of the particles (approximately 80% in the direction normal to the impact). This deformation results in a huge increase in the surface area of the particles. Upon impact, the effect is therefore intimate contact between the particles and the deposition surface, which leads to the formation of metal bonds and a coating having a very dense and compact structure.

Advantageously, as an alternative to the three deposition techniques listed above which are all high kinetic energy impact deposition techniques, it is also possible to use other techniques which exploit different deposition methods but which are able to generate coatings having a very dense and compact structure.

The combination of the HVOF or HVAF or KM deposition technique and the chemical components used to form the coatings 3 and base coating 30 allows coatings to be obtained which have a high bond strength to the lower material on which they are deposited.

The uniqueness of the APS (atmospheric plasma deposition) technique resides in its ability to develop complex films at relatively low substrate temperatures. These processes make it possible to widely vary the properties of the film by controlling the conditions of the plasma, for example its electron density, energy and distribution function. In particular, the APS technique makes it possible to obtain extremely high deposition speeds that comply with continuous flow processes, but without requiring any vacuum system, thus allowing a production process that is cheap and relatively efficient to implement on pre-existing production lines. Moreover, the APS technique is highly versatile in terms of the plasma sources which may be used to clean the surface before deposition, and has a surprising capability for developing modelled or nanostructured surfaces.

The additive laser welding technique, also known as laser cladding, may also be carried out using powders. The laser beam used locally heats the surface of the substrate, generating a weld pool thereon, to which the powdered coating material is simultaneously conducted in order to be welded by the laser. The time of action is short and, in any case, only causes minimal deformations; the cooling process takes place fast. As a result, a coating is obtained that is joined to the base material by means of a metallurgical procedure. This coating is stronger than those which are produced by thermal spraying techniques, and thus has a lower environmental impact.

The laser cladding technique therefore has the advantage of joining the material of the coating to the material of the base by means of bonds that are stronger than those produced by thermal spraying, and at the same time with optimal surface quality and few deformations, while also ensuring better energy efficiency.

As shown in the accompanying figures, the disc 1 is preferably provided with an upper and lower coating layer 3, 3', which layers cover both of the faces 20a, 20b and thus create both of the braking surfaces 2a and 2b of the braking band 2.

It is clear that, in one variant, just the upper coating layer 3 or just the lower coating layer 3' may be provided, so as to cover the braking band on only one braking surface.

According to embodiments not shown in the appended figures, the upper coating layer 3 or lower coating layer 3' may also extend to other parts of the disc 1 such as the annular fixing portion 4 and the bell 5, up to covering the entire surface of the disc 1. In particular, the upper coating layer 3 or lower coating layer 3', as well as the protective base coating 30, may cover - in addition to the braking band - only the fixing portion or only the bell.

According to a particularly preferred embodiment of the method, the depositing step b) for forming the protective base coating 30 comprises two or more distinct stages of depositing the material in particulate form on the same surface to form the protective coating.

In greater detail, the aforesaid depositing step b) comprises:
- a first stage of depositing material in particulate form to create a first layer of the protective base coating 30 directly on the disc; and
- a second stage of depositing material in particulate form to create a second layer on the first layer.

As will be explained in the following, the second finishing layer makes it possible to set the surface finish of the protective base coating 3.

Dividing the depositing step b) into two or more stages makes it possible in particular to differentiate at least the granulometry of the material in particulate form used in the different stages. This makes the depositing step b) more flexible.

According to a particularly preferred embodiment of the method, the step b) of depositing the particulate material (WC + Fe + Cr + Al) which forms the upper coating layer 3 or lower coating layer 3' comprises two or more distinct stages of depositing the particulate material on the same surface in order to form the protective coating, in a manner similar to that described for the protective base coating 30.

As may be appreciated from what has been described, the braking band, the brake disc and the method for manufacturing the braking band and the brake disc according to the invention make it possible to overcome the disadvantages of the prior art.

In fact, the braking bands and the coated brake discs manufactured according to the invention are more resistant to wear and corrosion than the cast iron/steel discs of the prior art.

Moreover, in a particularly innovative manner, the braking band and the disc manufactured according to this invention do not require particular treatments to guarantee effective adhesion of the coating layers on the base band made of titanium, by contrast with the brake discs made of cast iron/steel.

In other words, there is no need for intermediate layers or interlayers, mechanical activations or other pre-treatments, with the exception of possible cleaning and grease removal procedures, before the step of depositing the mixture of ceramic and metal particles. This makes it possible to obtain a braking band and a coated brake disc that are easy to manufacture and reliable.

Moreover, synergistically, at the same time a particularly light disc is obtained which has a high mechanical strength and is suitable for withstanding mechanical stresses even at high temperatures, and which also has a lower tendency to accumulate mechanical and thermal deformations by comparison with cast iron discs of the prior art, again as a result of the low coefficient of thermal expansion.

As a result of the synergistic combination of titanium alloy and a coating preferably made of tungsten carbide, iron, chromium and aluminum, a brake disc and a braking band are obtained which have a limited thermal expansion, which makes the manufactured product more stable in temperature and guarantees that the coating will not detach and, consequently, guarantees an improved resistance to corrosion that, as a result of the combined effect of the titanium alloy and the coating layer, achieves a strength comparable to that of stainless steel.

Furthermore, a brake disc that is made of coated titanium ensures that the thermal limit for the use of titanium for structural applications (typically 550/580 °C), which limit is caused by the phenomena of oxidation and heat which affect titanium and its alloys, is exceeded. The coating layer ensures that the base material (titanium) is protected from oxidation phenomena which would otherwise make it impossible to create a disc that is able to guarantee the lightness specifications that are required of high-performance discs, for example brake discs for sports cars. In other words, without a coating layer, it would be necessary to design discs which are heavy and have relatively large dimensions and a high thermal inertia, i.e. which do not have any advantage over standard materials already in use for manufacturing discs.

It has also been possible to verify that the coated brake disc according to the invention has better performance in terms of resistance to environmental conditions (thermal shocks and saline attacks).

The brake disc 1 is also generally relatively cheap to manufacture, as a result of simplifying the process for manufacturing the coating layers.

Moreover, by contrast with the sintering techniques of the prior art, in which the titanium and ceramic particles are simultaneously sintered together in a mix in one single stage, all being subjected to pressures between 800 °C and 1200 °C, the manufacturing method according to this invention makes it possible to deposit the upper coating layer (3) and/or lower coating layer (3') at much lower temperatures (at substantially "cold" temperatures). As a result, the microstructure and the mechanical properties of the base band (20) are better preserved and in particular are disassociated from the mechanical properties of the ceramic particles (and therefore of the coating layers). Therefore, as a result of the present invention, the rigidity and breaking load of the base band (20) are optimized independently from the hardness, wear and corrosion resistance properties of the coating layers.

Moreover, depositing the coating layer directly on the base band made of titanium, without intermediate layers, advantageously makes the deposition process more efficient. It should be noted that titanium has a reduced coefficient of thermal expansion by comparison with the typical coefficient of thermal expansion of cast iron. This allows more effective matching of the thermal expansions and thus makes it possible to not have to use an intermediate layer between the base band and the coating layer for bonding.

## Claims

1. A method for manufacturing a braking band (2) for a brake disc (1) of a disc brake, comprising the following operating steps:
a) providing a braking band (2) provided with a base band (20) having an upper face (20a) and a lower face (20b) arranged on the opposite side to, i.e. opposed to, the upper face (20a), the lower face and upper face each defining, at least partially one of the two sides of the brake disc (1), the base band (20) being made of titanium or titanium alloy;
b) directly depositing, above at least the upper face (20a) and/or the lower face (20b), a material in particle form consisting of ceramic and metallic and/or intermetallic particles so to create an upper (3) and/or lower coating layer (3') suitable for withstanding the braking action of the calipers of a disc brake.

2. The method according to claim 1, wherein step b) comprises the step of directly depositing, above at least the upper face (20a) and/or the lower face (20b), a material in particle form consisting of tungsten carbide (WC), iron (Fe), chromium (Cr) and aluminum (Al), by a spray deposition technique, preferably HVOF (high velocity oxygen fuel), or by a HVAF (high velocity air fuel) technique or by a KM (kinetic metallization) technique or by an APS (atmospheric plasma deposition) technique, or a laser deposition technique, such as a laser cladding technique, forming an upper coating layer (3) and/or lower coating layer (3') suitable for withstanding the braking action of the calipers of a disc brake, i.e. forming at least one of the two braking surfaces of the braking band.

3. The method according to claim 1, wherein step b) includes, before directly depositing a material in particle form consisting of ceramic and metallic and/or intermetallic particles above at least the upper (20a) and/or lower face (20b), depositing a material in particle form consisting of:
- chromium carbide (Cr3C2) and nickel-chromium (NiCr), or
- nickel-chromium (NiCr), iron (Fe), molybdenum (Mo), cobalt (Co), manganese (Mn), and aluminum (Al),
by a spray deposition technique, preferably HVOF (high velocity oxygen fuel), or by a HVAF (high velocity air fuel) technique or by a KM (kinetic metallization) technique or by an APS (atmospheric plasma deposition) technique, or a laser deposition technique, such as a laser cladding technique, forming a protective base coating (30) which covers at least the upper face (20a) and/or the lower face (20b) of the base band (20) and arranged under the upper (3) and/or lower coating layer (3') suitable for withstanding the braking action of the calipers of a disc brake.

4. The method according to any one of the preceding claims, wherein the titanium alloy of the base band (20) is a titanium (Ti) and aluminum (Al) alloy.

5. The method according to claim 4, wherein the titanium alloy of the base band (20) is a titanium (Ti), aluminum (Al) and vanadium (V) alloy, preferably a Ti6Al4V alloy.

6. The method according to one or more of the preceding claims, wherein the material in particle form deposited in the depositing step b) to obtain the protective base coating (30) consists of 65% to 95% by weight of chromium carbide (Cr3C2) and the remainder of nickel-chromium (NiCr).

7. The method according to one or more of the preceding claims, wherein the material in particle form deposited in the depositing step b) to obtain the upper or lower coating layer (3, 3') consists of 75% to 87% by weight of tungsten carbide (WC) and the remainder of iron (Fe), chromium (Cr) and aluminum (Al), preferably consisting of 10% to 17% by weight of iron (Fe), 2.5% to 5.8% by weight of chromium (Cr), 0.6% to 2.2% by weight of aluminum (Al) and the remainder of tungsten carbide(WC), even more preferably of 85% by weight of tungsten carbide (WC) and 15% by weight of iron (Fe), chromium (Cr) and aluminum (Al) .

8. A method for manufacturing a brake disc (1), comprising the step of providing a braking band (2) manufactured according to the method according to any one of claims 1 to 7 and a bell (5) connected to said braking band (2).

9. A braking band (2) for a brake disc (1) for a disc brake, said braking band (2) being comprised of:
- a braking band (20) having an upper face (20a) and a lower face (20b) arranged on the opposite side to, i.e. opposed to, the upper face (20a), the lower (20b) and upper (20a) faces each defining, at least partially one of the two sides of the brake disc (1);
- an upper coating layer (3) joined to the base band (20) along the upper face (20a),
- a lower coating layer (3') joined to the base band (20) along the lower face (20b),
said braking band (2) being **characterized in that** the base band (20) is entirely made of titanium or titanium alloy,
and **in that** the upper coating layer (3) and the lower coating layer (3') consist of a deposited mixture of ceramic and metallic and/or intermetallic particles.

10. The braking band (2) according to claim 9, wherein the upper coating layer (3) and the lower coating layer (3') consist of a mixture of particles comprising at least one transition metal carbide and at least one metal or intermetallic compound.

11. The braking band (2) according to claim 10, wherein the upper coating layer (3) and the lower coating layer (3') consist of tungsten carbide (WC), iron (Fe), chromium (Cr) and aluminum (Al) and are obtained by depositing tungsten carbide (WC), iron (Fe), chromium (Cr), and aluminum (Al) in particle form directly on the base band (20) by a depositing technique, preferably by spraying, such as by an HVOF (high velocity oxygen fuel) technique, or by an HVAF (high velocity air fuel) technique or by a KM (kinetic metallization) technique.

12. A brake disc for a disc brake, comprising a braking band (2) according to any one of claims 9 to 11 and a bell (5) connected to said braking band (2).

13. The brake disc for a disc brake according to claim 12, wherein the bell (5) is connected in one piece to the braking band (2) and consists of a titanium alloy co-casting with the base band (20).

14. The brake disc for a disc brake according to claim 12, wherein the bell (5) is connected in one piece to the braking band (2) and consists of an aluminum alloy co-casting with the base band (20).

15. The brake disc for a disc brake according to claim 12, wherein the bell (5) is not co-cast in one piece with the braking band (2) but is connected to the braking band (2) by means of bell-band connection means, such as by assembling, or by interference fitting, or by nailing.

## Patentansprüche

1. Verfahren zur Herstellung eines Bremsbands (2) für eine Bremsscheibe (1) einer Scheibenbremse, umfassend die folgenden Arbeitsschritte:
a) Bereitstellen eines Bremsbands (2), welches mit einem Basisband (20) bereitgestellt ist, welches eine obere Fläche (20a) und eine untere Fläche (20b) aufweist, welche an der entgegengesetzten Seite zu, d. h. entgegengesetzt zu, der oberen Fläche (20a) angeordnet ist, wobei die untere Fläche und die obere Fläche jeweils wenigstens teilweise eine der beiden Seiten der Bremsscheibe (1) definieren, wobei das Basisband (20) aus Titan oder einer Titanlegierung gefertigt ist,
b) direktes Abscheiden, oberhalb wenigstens der oberen Fläche (20a) und/oder der unteren Fläche (20b), eines Materials in Partikelform, welches aus keramischen und metallischen und/oder intermetallischen Partikeln besteht, um eine obere (3) und/oder untere Beschichtungslage (3') zu erzeugen, welche dazu geeignet ist/sind, der Bremsaktion des Bremssattels einer Scheibenbremse standzuhalten.

2. Verfahren nach Anspruch 1, wobei Schritt b) den Schritt eines direkten Abscheidens, oberhalb wenigstens der oberen Fläche (20a) und/oder der unteren Fläche (20b), eines Materials in Partikelform, welches aus Wolframkarbid (WC), Eisen (Fe), Chrom (Cr) und Aluminium (AI) besteht, mittels einer Sprühabscheidungstechnik, vorzugsweise einer HVOF- (Hochgeschwindigkeitsflammspritzen mit Sauerstoff - High Velocity Oxygen Fuel) oder mittels einer HVAF-(Hochgeschwindigkeitsflammspritzen mit Luft - High Velocity Air Fuel) Technik oder mittels einer KM- (Kinematische Metallisierung) Technik oder mittels einer APS- (atmosphärische Plasmaabscheidung) Technik oder einer Laserabscheidungstechnik, wie zum Beispiel einer Laserauftragsschweißtechnik, umfasst, wodurch eine obere Beschichtungslage (3) und/oder eine untere Beschichtungslage (3') gebildet wird, welche dazu geeignet ist/sind, der Bremsaktion der Bremssattel einer Scheibenbremse standzuhalten, d. h. Bilden wenigstens einer der zwei Bremsoberflächen des Bremsbands.

3. Verfahren nach Anspruch 1, wobei Schritt b), vor einem direkten Abscheiden eines Materials in Partikelform, welches aus keramischen und metallischen und/oder intermetallischen Partikeln besteht, oberhalb wenigstens der oberen (20a) und/oder der unteren Fläche (20b), ein Abscheiden eines Materials in Partikelform umfasst, welches besteht aus:
- Chromkarbid (Cr3C2) und Nickel-Chrom (NiCr), oder
- Nickel-Chrom (NiCr), Eisen (Fe), Molybdän (Mo), Kobalt (Co), Mangan (Mn) und Aluminium (AI),
mittels einer Sprühabscheidungstechnik, vorzugsweise HVOF-(Hochgeschwindigkeitsflammspritzen mit Sauerstoff - High Velocity Oxygen Fuel) oder mittels einer HVAF-(Hochgeschwindigkeitsflammspritzen mit Luft - High Velocity Air Fuel) Technik oder mittels einer KM- (Kinematische Metallisierung) Technik oder mittels einer APS- (atmosphärische Plasmaabscheidung) Technik oder einer Laserabscheidungstechnik, wie zum Beispiel einer Laserauftragsschweißtechnik, umfasst, wodurch eine schützende Basisbeschichtung (30) gebildet wird, welche wenigstens die obere Fläche (20a) und/oder die untere Fläche (20b) des Basisbands (20) bedeckt und unter der oberen (3) und/oder der unteren Beschichtungslage (3') angeordnet ist, welche dazu geeignet ist/sind, der Bremsaktion der Bremssattel einer Scheibenbremse standzuhalten.

4. Verfahren nach einem der vorhergehenden Ansprüche, wobei die Titanlegierung des Basisbands (20) eine Titan- (Ti) und Aluminium- (Al) Legierung ist.

5. Verfahren nach Anspruch 4, wobei die Titanlegierung des Basisbands (20) eine Titan- (Ti), Aluminium- (Al) und Vanadium- (V) Legierung, vorzugsweise eine Ti6Al4V-Legierung ist.

6. Verfahren nach einem der vorhergehenden Ansprüche, wobei das Material in Partikelform, welches in dem Abscheidungsschritt b) abgeschieden wird, um die schützende Basisbeschichtung (30) zu erhalten, zu 65 % bis 95 % an Gewichtsanteil aus Chromkarbid (Cr3C2) und der Rest aus Nickel-Chrom (NiCr) besteht.

7. Verfahren nach einem der vorhergehenden Ansprüche, wobei das Material in Partikelform, welches in dem Abscheidungsschritt b) abgeschieden wird, um die obere oder die untere Beschichtungslage (3, 3') zu erhalten, zu 75 % bis 87 % an Gewichtsanteil aus Wolframkarbid (WC) und der Rest aus Eisen (Fe), Chrom (Cr) und Aluminium (AI) besteht, vorzugsweise bestehend zu 10% bis 17 % an Gewichtsanteil aus Eisen (Fe), zu 2,5 % bis 5,8 % an Gewichtsanteil aus Chrom (Cr), zu 0,6 % bis 2,2 % an Gewichtsanteil aus Aluminium (AI) und der Rest aus Wolframkarbid (WC), noch bevorzugter zu 85 % an Gewichtsanteil aus Wolframkarbid (WC) und zu 15 % an Gewichtsanteil aus Eisen (Fe), Chrom (Cr) und Aluminium (Al).

8. Verfahren zur Herstellung einer Bremsscheibe (1), umfassend den Schritt eines Bereitstellens eines Bremsbands (2), welches gemäß dem Verfahren nach einem der vorhergehenden Ansprüche 1 bis 7 hergestellt wird, und einer Glocke (5), welche mit dem Bremsband (2) verbunden ist.

9. Bremsband (2) für eine Bremsscheibe (1) für eine Scheibenbremse, wobei das Bremsband (2) umfasst ist aus:
- einem Bremsband (20), welches eine obere Fläche (20a) und eine untere Fläche (20b) aufweist, welche an der entgegengesetzten Seite zu, d. h. entgegengesetzt zu, der oberen Fläche (20a) angeordnet ist, wobei die untere Fläche (20b) und die obere Fläche (20a) jeweils wenigstens teilweise eine der beiden Seiten der Bremsscheibe (1) definieren,
- eine obere Beschichtungslage (3), welche mit dem Basisband (20) entlang der oberen Fläche (20a) zusammengefügt ist,
- eine untere Beschichtungslage (3'), welche mit dem Basisband (20) entlang der unteren Fläche (20b) zusammengefügt ist,
wobei das Bremsband (2) **dadurch gekennzeichnet ist, dass** das Basisband (20) vollständig aus Titan oder einer Titanlegierung gefertigt ist,
und, dass die obere Beschichtungslage (3) und die untere Beschichtungslage (3') aus einer abgeschiedenen Mixtur von keramischen und metallischen und/oder intermetallischen Partikeln besteht.

10. Bremsband (2) nach Anspruch 9, wobei die obere Beschichtungslage (3) und die untere Beschichtungslage (3') aus einer Mixtur aus Partikeln besteht, welche wenigstens ein Übergangsmetallkarbid und wenigstens eine metallische oder eine intermetallische Verbindung umfasst.

11. Bremsband (2) nach Anspruch 10, wobei die obere Beschichtungslage (3) und die untere Beschichtungslage (3') aus Wolframkarbid (WC), Eisen (Fe), Chrom (Cr) und Aluminium (AI) bestehen und durch ein direktes Abscheiden von Wolframkarbid (WC), Eisen (Fe), Chrom (Cr) und Aluminium (AI) auf das Basisband (20) erhalten sind, mittels einer Abscheidungstechnik, vorzugsweise mittels Sprühen, wie zum Beispiel mittels einer HVOF- (Hochgeschwindigkeitsflammspritzen mit Sauerstoff - High Velocity Oxygen Fuel) Technik oder mittels einer HVAF- (Hochgeschwindigkeitsflammspritzen mit Luft - High Velocity Air Fuel) Technik oder mittels einer KM- (Kinematische Metallisierung) Technik.

12. Bremsscheibe für eine Scheibenbremse, umfassend ein Bremsband (2) nach einem der Ansprüche 9 bis 11 und eine Glocke (5), welche mit dem Bremsband (2) verbunden ist.

13. Bremsscheibe für eine Scheibenbremse nach Anspruch 12, wobei die Glocke (5) in einem Stück mit dem Bremsband (2) verbunden ist und aus einem Titanlegierung-Verbundguss mit dem Basisband (20) besteht.

14. Bremsscheibe für eine Scheibenbremse nach Anspruch 12, wobei die Glocke (5) in einem Stück mit dem Bremsband (2) verbunden ist und aus einem Aluminiumlegierung-Verbundguss mit dem Basisband (20) besteht.

15. Bremsscheibe für eine Scheibenbremse nach Anspruch 12, wobei die Glocke (5) nicht in einem Stück mit dem Bremsband (2) verbundgegossen ist, sondern mit dem Bremsband (2) mithilfe von Glocke-Band-Verbindungsmitteln verbunden ist, wie zum Beispiel durch Zusammenbauen oder durch Pressverbinden oder durch Vernageln.

## Revendications

1. Procédé de fabrication d'une bande de freinage (2) pour un disque de frein (1) d'un frein à disque, comprenant les étapes opérationnelles suivantes :
a) la fourniture d'une bande de freinage (2) munie d'une bande de base (20) présentant une face supérieure (20a) et une face inférieure (20b) agencée du côté opposé à, c'est-à-dire opposée à, la face supérieure (20a), la face inférieure et la face supérieure définissant chacune, au moins partiellement, l'un des deux côtés du disque de frein (1), la bande de base (20) étant en titane ou en alliage de titane ;
b) le dépôt direct, au-dessus d'au moins la face supérieure (20a) et/ou la face inférieure (20b), d'un matériau sous forme de particules consistant en des particules céramiques et métalliques et/ou intermétalliques de manière à créer une couche de revêtement supérieure (3) et/ou une couche de revêtement inférieure (3') appropriées pour résister à l'action de freinage des étriers d'un frein à disque.

2. Procédé selon la revendication 1, dans lequel l'étape b) comprend l'étape de dépôt direct, au-dessus d'au moins la face supérieure (20a) et/ou la face inférieure (20b), d'un matériau sous forme de particules consistant en du carbure de tungstène (WC), du fer (Fe), du chrome (Cr) et de l'aluminium (Al), par une technique de dépôt par pulvérisation, de préférence HVOF (oxy-combustible à haute vitesse), ou par une technique HVAF (air-combustible à haute vitesse) ou par une technique KM (métallisation cinétique) ou par une technique APS (dépôt plasma à pression atmosphérique), ou une technique de dépôt laser, telle qu'une technique de placage au laser, formant une couche de revêtement supérieure (3) et/ou une couche de revêtement inférieure (3') appropriées pour résister à l'action de freinage des étriers d'un frein à disque, c'est-à-dire formant au moins l'une des deux surfaces de freinage de la bande de freinage.

3. Procédé selon la revendication 1, dans lequel l'étape b) inclut, avant le dépôt direct d'un matériau sous forme de particules consistant en des particules céramiques et métalliques et/ou intermétalliques au-dessus d'au moins la face supérieure (20a) et/ou la face inférieure (20b), le dépôt d'un matériau sous forme de particules consistant en :
- du carbure de chrome (Cr3C2) et du nickel-chrome (NiCr), ou
- du nickel-chrome (NiCr), du fer (Fe), du molybdène (Mo), du cobalt (Co), du manganèse (Mn) et de l'aluminium (Al),
par une technique de dépôt par pulvérisation, de préférence HVOF (oxy-combustible à haute vitesse), ou par une technique HVAF (air-combustible à haute vitesse) ou par une technique KM (métallisation cinétique) ou par une technique APS (dépôt plasma à pression atmosphérique), ou une technique de dépôt laser, telle qu'une technique de placage au laser, formant un revêtement de base protecteur (30) qui recouvre au moins la face supérieure (20a) et/ou la face inférieure (20b) de la bande de base (20) et agencé sous la couche de revêtement supérieure (3) et/ou la couche de revêtement inférieure (3') appropriées pour résister à l'action de freinage des étriers d'un frein à disque.

4. Procédé selon l'une quelconque des revendications précédentes, dans lequel l'alliage de titane de la bande de base (20) est un alliage de titane (Ti) et d'aluminium (Al).

5. Procédé selon la revendication 4, dans lequel l'alliage de titane de la bande de base (20) est un alliage de titane (Ti), d'aluminium (Al) et de vanadium (V), de préférence un alliage Ti6A14V.

6. Procédé selon une ou plusieurs des revendications précédentes, dans lequel le matériau sous forme de particules déposé à l'étape de dépôt b) pour obtenir le revêtement de base protecteur (30) consiste en 65 % à 95 % en poids de carbure de chrome (Cr3C2) et le reste étant du nickel-chrome (NiCr).

7. Procédé selon une ou plusieurs des revendications précédentes, dans lequel le matériau sous forme de particules déposé à l'étape de dépôt b) pour obtenir la couche de revêtement supérieure ou inférieure (3, 3') consiste en 75 % à 87 % en poids de carbure de tungstène (WC) et le reste étant du fer (Fe), du chrome (Cr) et de l'aluminium (Al), de préférence consistant en 10 % à 17 % en poids de fer (Fe), 2,5 % à 5,8 % en poids de chrome (Cr), 0,6 % à 2,2 % en poids d'aluminium (Al) et le reste étant du carbure de tungstène (WC), encore plus préférentiellement en 85 % en poids de carbure de tungstène (WC) et 15 % en poids de fer (Fe), de chrome (Cr) et d'aluminium (Al).

8. Procédé de fabrication d'un disque de frein (1), comprenant l'étape de fourniture d'une bande de freinage (2) fabriquée selon le procédé selon l'une quelconque des revendications 1 à 7 et d'une cloche (5) reliée à ladite bande de freinage (2).

9. Bande de freinage (2) pour un disque de frein (1) pour un frein à disque, ladite bande de freinage (2) étant composée de :
- une bande de freinage (20) présentant une face supérieure (20a) et une face inférieure (20b) agencée du côté opposé à, c'est-à-dire opposée à, la face supérieure (20a), la face inférieure (20b) et la face supérieure (20a) définissant chacune, au moins partiellement, l'un des deux côtés du disque de frein (1) ;
- une couche de revêtement supérieure (3) jointe à la bande de base (20) le long de la face supérieure (20a),
- une couche de revêtement inférieure (3') jointe à la bande de base (20) le long de la face inférieure (20b),
ladite bande de freinage (2) étant **caractérisée en ce que** la bande de base (20) est entièrement en titane ou en alliage de titane,
et **en ce que** la couche de revêtement supérieure (3) et la couche de revêtement inférieure (3') consistent en un mélange déposé de particules céramiques et métalliques et/ou intermétalliques.

10. Bande de freinage (2) selon la revendication 9, dans laquelle la couche de revêtement supérieure (3) et la couche de revêtement inférieure (3') consistent en un mélange de particules comprenant au moins un carbure métallique de transition et au moins un composé métallique ou intermétallique.

11. Bande de freinage (2) selon la revendication 10, dans laquelle la couche de revêtement supérieure (3) et la couche de revêtement inférieure (3') consistent en du carbure de tungstène (WC), du fer (Fe), du chrome (Cr) et de l'aluminium (Al) et sont obtenues par dépôt de carbure de tungstène (WC), de fer (Fe), de chrome (Cr) et d'aluminium (Al) sous forme de particules directement sur la bande de base (20) par une technique de dépôt, de préférence par pulvérisation, tel que par une technique HVOF (oxy-combustible à haute vitesse) ou par une technique HVAF (air-combustible à haute vitesse) ou par une technique KM (métallisation cinétique).

12. Disque de frein pour frein à disque, comprenant une bande de freinage (2) selon l'une quelconque des revendications 9 à 11 et une cloche (5) reliée à ladite bande de freinage (2).

13. Disque de frein pour frein à disque selon la revendication 12, dans lequel la cloche (5) est solidaire de la bande de freinage (2) et consiste en un co-moulage d'alliage de titane avec la bande de base (20).

14. Disque de frein pour frein à disque selon la revendication 12, dans lequel la cloche (5) est solidaire de la bande de freinage (2) et consiste en un co-moulage d'alliage d'aluminium avec la bande de base (20).

15. Disque de frein pour frein à disque selon la revendication 12, dans lequel la cloche (5) n'est pas co-moulé d'un seul tenant avec la bande de freinage (2) mais est relié à la bande de freinage (2) à l'aide de moyens de liaison cloche-bande, tels que par assemblage, ou par ajustement serré, ou par clouage.
